# EUROPEAN PATENT APPLICATION

(11) **EP 1 158 349 A1**
(43) Date of publication of application: **28.11.2001**
(21) Application number: 00110441.3
(22) Date of filing: 16.05.2000
(51) Int. Cl.: G02F 1/1337

(54) **Process for producing a polymeric liquid crystal alignment layer, use of such an alignment layer, and liquid crystal display comprising such an alignment layer**

(71) Applicant: Max-Planck-Gesellschaft zur Förderung der Wissenschaften e.V., 80539 München (DE)
(72) Inventor: Rühe, Jürgen, Prof. Dr., 79356 Eichstetten (DE); Johannsmann, Diethelm, PD Dr., 55122 Mainz (DE); Peng, Bin, 55128 Mainz (DE)
(74) Representative: Draudt, Jutta, Dr.

(57) **Abstract**

In the present invention a process for producing a homogeneous polymeric liquid crystal alignment layer which induces a tilted alignment in an adjacent low molecular weight nematic medium is described.

## Description

The present invention relates to a process for producing a polymeric liquid crystal alignment layer. Such an alignment layer is particularly suitable for the production of liquid crystal displays.

Polymeric alignment layers defining the orientation of the nematic director - and thereby the ground state - of liquid crystal (LC) cells are key components in liquid crystal displays. The surfaces must not only themselves have a well-defined anisotropy; in addition, they must be able to transfer this orientation into the adjacent nematic fluid. In order to increase the interaction between the surface and the bulk, "soft alignment layers" have been suggested in, for example, *Langmuir* 1993, 9, 9211 by T. Seki, M. Sakuragi, Y. Kawanishi, Y. Suzuki, T. Tamaki, R. Fukuda and K. Ichimura; *Nature* 1999, 399, 338 by G.P. Bryan-Brown E.L. Wood, I.C. Sage; *Adv*. *Mat*. 1992, 4, 679, by R.A.M. Hikmet; and R.A.M. Hikmet, C. de Witz in *J. Appl. Phys*. 1991, 70, 1265. A common principle of these interfaces is their partial miscibility with the nematic medium resulting in interdigitation and swelling. Examples for this approach are command surfaces or anisotropic gel layers. Apart from a more intimate contact to the bulk this approach also provides means for tuning the interaction. Both the pretilt angle and the anchoring energy can be adjusted via degree of mixing, the latter, for instance, being a function of the crosslink density of the gel or the miscibility between the alignment layer and the nematic phase.

Soft alignment layers have to meet the somewhat conflicting targets of a good swellability in the bulk, on the one hand, and a durable attachment to the substrate, on the other. This can be accomplished by tethered polymer layers. By chemically grafting the chains to the substrate, the dissolution of the alignment layer is prevented. A special class of tethered layers are the so-called "polymer brushes", as described by S.T. Milner in *Science* 1991, 251, 905. Further relevant works in this field are for example Halperin, A.; Tirell, M.; Lodge, T.P.; *Adv. Polym. Sc*. 1992, *100,* 31, Alexander S., J. Phys. 28, 977 (1977), de Gennes P.G., J. Phys. (France) 37, 1445 /1976). These densely grafted linear polymer chains are particularly well defined with regard to their surface attachment and their chain topology. Although they can be crosslinked to form a gel, the strongest swelling is obtained in the uncrosslinked state. For a high enough grafting density the osmotic pressure of the chains induces vertical chain stretching and, as a result uniaxial anisotropy, as described by V.M. Amoskov, T.M. Birshtein, V.A. Pryamitsyn in *Macromolecules* 1996, 29, 7240.

Using liquid crystal polymer brushes (LCP-brushes) as alignment layers goes back to a suggestion by Halperin and coworkers, as published in *Europhys*. *Letters,* 1993, 21, 575. These authors have investigated the interplay between vertical chain stretching and the orienting action of the uncovered portions of the substrate. Halperin et al. describe the competition between stretched main chain liquid crystal polymer back bones, inducing vertical alignment, and glass surfaces in-between the grafting sites, favoring planar alignment.

However, LC alignment layers must also provide for an adjustable surface tilt angle and a well-defined azimuthal angle. The rubbed polyimide layers which have been used as polymeric alignment layers up to now, have been revealed to have many disadvantages. Such polyimide layers are, for example, described in J. Cognard, Alignment of Liquid Crystals and their Mixtures, Gordon and Breach, London, 1982. The polyimide layer is mechanically rubbed according to merely empirical processes whereby the nematic director takes the rubbing direction. The alignment properties of the polyimides are presumably due to effects based on main chain elongations and partial crystallinity. The actual microscopic processes occuring are only partially understood and can be hardly controlled.

It is therefore object of the present invention to provide a process of producing an effective homogeneously aligned polymeric liquid crystal alignment layer and having an adjustable surface tilt angle and a defined azimuthal angle. Such alignment layers should be free from surface defects as far as possible and thus suitable for LC displays.

This object has been solved by the process as defined in claim 1. The subclaims define preferred embodiments of the process of the invention.

The present invention relates to a process for producing a polymeric liquid crystal alignment layer comprising polymer chains grafted onto at least one surface of a substrate wherein the surface of a cleaned substrate is treated prior to the formation of the alignment layer and the substrate surface between the grafting sites is filled with molecules having long-chain alkyl groups.

The present invention further relates to the use of the alignment layer produced for the production of a liquid crystal display.

Additionally, the present invention also relates to a rapid liquid crystal display comprising an alignment layer as produced according to the invention.

The present invention is further illustrated by means of the figures.
- Figure 1: is a schematic representation of polymeric monolayers having mesogenic units a) in the main chain or b) in the side chain.
- Figure 2: is a reaction scheme of forming polymeric brushes on a substrate surface.
- Figure 3: presents optical images taken with a polarizing microsop showing the influence of rubbing on the LC texture.

It has been surprisingly found that a homogeneous orientation can be induced into the liquid crystalline polymer chain or polymer brush layer and consequently into the adjacent low molecular weight LC-phase by treating at least one surface of the substrate prior to growth of the polymer molecules. If now the alignment layer is built-up from two or more components of which one consists of the surface-attached chains, the other controlling the polymer surface interactions, the alignment layer can induce an adjustable surface tilt and azimuthal angle. In this way, the liquid crystal polymer includes a tilted alignment in an adjacent low molecular weight nematic medium.

In a preferred embodiment of the invention the substrate surface is mechanically rubbed.

It has been revealed that the substrate is preferably rubbed by moving a cloth thereon in a predetermined direction. Any cloth may be taken for rubbing the substrate surface. Preferably, a velvet cloth made of nylon is used.

In priciple, any substrate material may be used for forming the polymeric liquid crystal alignment layer thereon. Practically, any substrate is appropriate to be incorporated in a liquid crystal cell. Preferably, a substrate made of glass or a polymeric material is used.

The alignment layer is produced by using the "polymer brush" technique. According to this method, the alignment layer is formed by chemically grafting polymer chains comprising mesomeric units onto the treated surface of the substrate. In this way, polymer brushes are formed on the substrate surface by covalent attachment. Favorably, the mesomeric units are incorporated in the side chains of the polymer.

For practical purposes side chain LCP brushes are more convenient to work with than the main chain system because they have lower nematic-isotropic transition temperatures and show in many cases a better miscibility with low molecur weight nematic compounds.

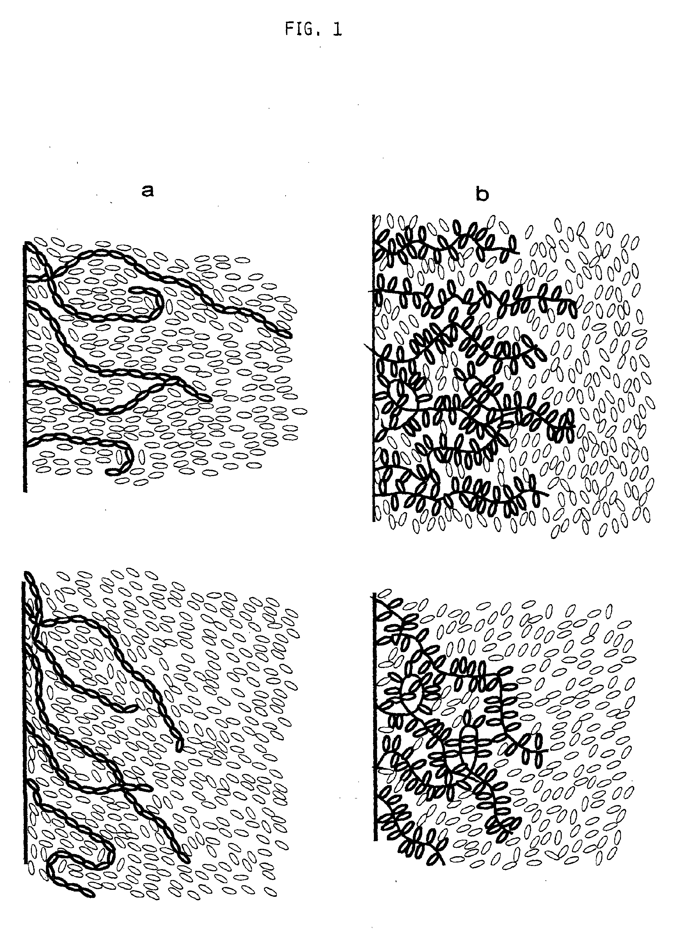

Figure 1 shows the schematic representation of polymeric monolayers having mesogenic units a) in the main chain and b) in the side chain. There are represented a homeotropic alignment and an alignment tilted with regard to the surface normal.

The synthesis of side chain LCP brushes has already been described by B. Peng, D. Johannsmann, J. Rühe in *Macromolecules* 1999, 32, 6759. In this paper a polymethacrylate chain with attached mesogenic units is grown from a substrate covered with a monolayer of surface-attached initiators by free radical chain polymerisation. Monomolecular layers of up to 230 nm dry thickness could be prepared. They can be swollen in low-molecular weight nematic compounds provided that these have a chemical nature similar to the side chains.

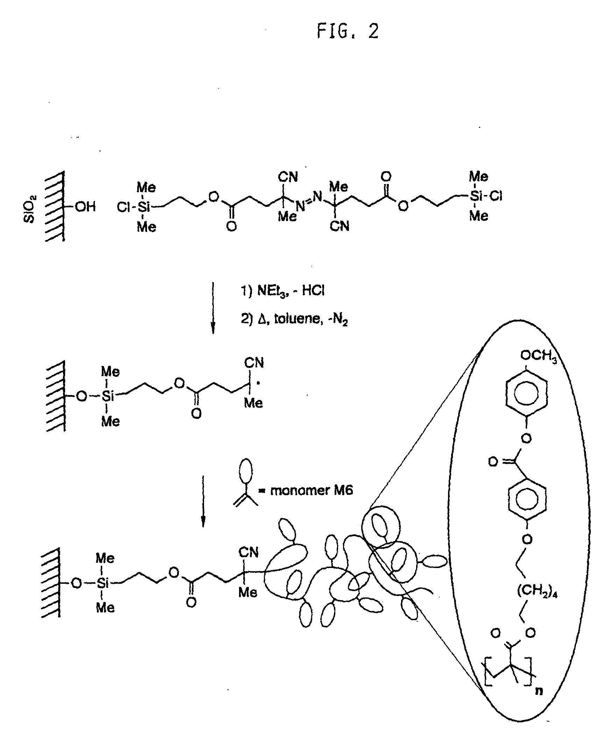

A reaction scheme of forming molecular brushes having side chain mesomeric units on a substrate surface is shown in Fig. 2. In the first step the surface of a glass substrate which has been cleaned before, is reacted with a polymerisation initiator. In the second step the polymerisation initiator is used to grow the polymer molecules at the surface in situ. As an example for a monomer used for generation of the brushes the monomer M6 is shown. The IUPAC name for M6 is poly[1-[[[6-[4-[(4'-methoxyphenoxy)carbonyl)]phenoxy]hexyl]oxy]carbonyl]-1-methyl-1,2-ethandiyl]. It substantially comprises the mesogen, a spacer group and a chain segment.

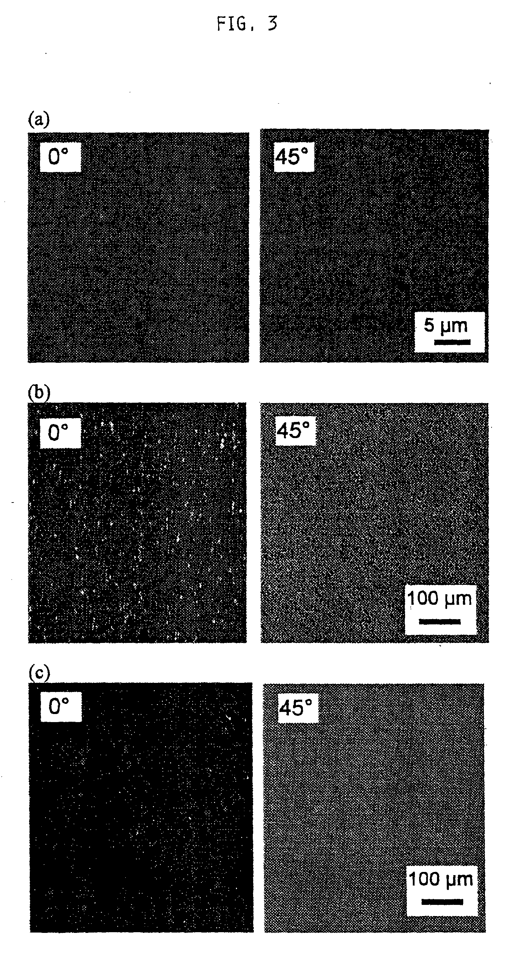

The pure LCP brushes are thick enough to show optical textures in the polarizing microscope. Figure 3 shows optical images taken with a polarizing microscope which demonstrate the influence of rubbing on the LC texture. The images of Figure 3(a) show a substrate which is not rubbed prior to the brush growth. One can see a multidomain texture of a pure brush with a thickness of about 230 nm. The dry monolayers exhibit planar multidomains with a domain size of few microns. In Fig. 3(b) the texture of a brush grown on a substrate rubbed with a velvet cloth is shown. When the polarizers are parallel to the rubbing direction, the sample is dark. At a angle of 45°, the sample becomes bright. The texture observed under 45° contains more details and, in particular, indicates the rubbing direction. Fig. 3(c) is a micrograph obtained on a liquid crystal cell aligned with LCP brushes such as the one shown in (b). The orientation of the bulk LC follows the orientation of the brush. Although the texture still shows some stripes, the small defects in the brush seen in (b) are much attenuated in the bulk.

In the present invention, macroscopic LC monodomains are induced by a surface treatment *before* growth of the brush. In a preferred embodiment, bare glass slides are manually rubbed with a velvet cloth before immobilization of the initiator and the brush growth. Such a procedure suffices for alignment of the LCP brushes. Fig. 3 displays an image of a brush grown on a BK7 glass slide which was extensively rubbed. From the difference in brightness when rotating the sample with respect to the polarizers one sees that a preferred orientation has been achieved over the entire field of view. When the thus obtained brush is brought into contact with a low molecular weight liquid crystal also the low molecular weight liquid crystal becomes homogeneously aligned.

Figure 3(c) shows a micrograph of a 30 µm LC cell aligned with brushes of the type shown in panel 3(b). The surface tilt angle as measured with a Crystal Rotation Setup as described by G. Baur, V. Wittwer, D.W. Berreman in *Phys*. *Lett*. 1976, 56A, 142 was (0.0±0.6)°. One still sees slight stripes in the rubbing direction and a few dark spots, presumably caused by the micron-sized fibers. The small scale texture seen in panel 3(b) has disappeared.

In such a system the LC polymer brushes aligned according to the process of the invention may be provided with an adjustable surface tilt angle. This can be accomplished if during the production of the polymeric LC alignment layer, the substrate surface between the grafting sites is filled or covered with surface-attached molecules, which without the presence of a brush would induce a perpendicular alignment in a low molecular crystal, if brought into contact with such a substance. Examples for compounds, which induce such an alignment, are molecules which comprise long alkyl chains.

For practical uses, compounds having alkyl groups with 6 to 30 carbon atoms are used. Preferably, a compound having alkyl groups with 8 to 18 carbon atoms is used. A particularly preferred compound is dimethyloctadecyl-chlorosilane.

The preparation may be carried out as follows: A compound with the long alkyl chain is mixed with the initiator prior to initiator immobilization leading to a dilution of the brushes at the surface. It is favourable if both compounds contain the same reactive group for the surface attachment ("anchor group"). In this case the relative ratio of the two compounds can be adjusted very easily.

An additional influence on the azimuthal angle of the LC homogeneous alignment layer produced according to the present invention may be achieved by aligning the polymer brushes produced by external forces and subsequently fixing the same by crosslinking. In a preferred embodiment, the polymer brushes are aligned under shear.

The alignment layers produced according to the process of the present invention may be used for the production of liquid crystal displays. Such liquid crystal displays exhibit superior characteristics over the conventional LC displays.

The following examples illustrate the present invention.

### Examples

### Example 1

The formation of LCP brushes is achieved by growing the polymer chains directly from a surface-attached initiator as depicted in Figure 2. The monomer and initiator were synthesized as described in *Makromol*. *Chem.* 1982, 183, 2311 by M. Portugall, H. Ringsdorf, R. Zentel, and *Macromolecules* 1999, 32, 6759, by B. Peng, D. Johannsmann and J. Rühe. The glass substrate (BK7, Schott) was cleaned by sonification in 2% Hellmanex solution and subsequent rinsing in milliQ-water and ethanol. The cleaned glass substrate was placed face-down on a velvet cloth (Yoshikawa YA-20-R) and moved over the cloth by hand three times. Gentle vertical pressure was exerted during the rubbing movement. The rubbing length, which is the integrated length of cloth in contact with any given spot on the sample was about 65 cm. The substrate was blown off with pressurized air to remove debris loosely attached to the surface. The initiator was immobilized on the rubbed surface under inert conditions at room temperature for 15 hours in toluene solution of the initiator, using triethylamine as the acid acceptor. The substrate was then washed with solvents and dried. Polymerisation was carried out in toluene solution of the monomer (M6, see above) under inert conditions at 60°C. The brush thickness and the molecular weight can be adjusted via the monomer concentration and the polymerisation time. Table I gives the preparation conditions for the brushes whose textures are shown in Fig. 3.

**Table I**

| | Fig. 3a | Fig. 3b | Fig. 3c |
|---|---|---|---|
| Monomer concentration (mol/L) | 0.80 | 0.78 | 0.78 |
| Polymerisation time (hrs) | 48.4 | 10.5 | 14 |

After polymerisation, physisorbed chains were extracted with toluene over night. The sample were then dried in air. The brush thickness was estimated with surface plasmon spectroscopy on SiO₂-coated silver surfaces which had undergone the same conditions of brush preparation as the glass slides. The thickness ranges from 60 to 230 nm. Immediately after brush formation the brushes are quenched into a glassy isotropic state. The texture develops upon thermal annealing. The samples were heated from room temperature to 125°C at the rate of 15°C/min, kept at 125°C for 3 minutes and returned to room temperature at 15°C/min.

### Example 2

For the purpose of the induction of tilt, the aligning action of the LCP brush has to be put into competition to a different aligning agent, which by itself favors perpendicular alignment. To this a concurrent chemisorption of the initiator for the polymerisation, ADCS, with the compound dimethyloctadecylchlorosilane (DMOCS) was carried out. The latter compound reacts with the surface in a similar way as the initiator. In the described experiment a mixture of DMOCS and ADCS with a molar ratio of 2:1 in toluence solution in the presence of triethyl amine is used for the generation of the mixed monolayer (initiator and diluent) on a mechanically pretreated surface described in example 1. After washing and drying of the sample with the surface-attached mixed monolayer the polymerisation reaction was carried out as described in example 1 in detail. The polymerisation time was 15 hours giving a polymer layer thickness of about 70 nm. Two identical brush covered surfaces, where the brush had been diluted with DMOCS were assembled in an antiparallel way and filled by capillary action with the low molecular weight nematic compound ZLI-1052 from Merck. Mylar foils inserted in between the two cell walls were used as spacers. The total cell thickness was approximately d = 28µm. The existence of pretilt is inferred from measurements with the crystal rotation setup. For the thus prepared sample a tilt angle of α = (17±5)° is measured.

## Claims

1. A process for producing a polymeric liquid crystal alignment layer comprising polymer chains grafted onto at least one surface of a substrate wherein the surface of a cleaned substrate is treated prior to the formation of the alignment layer and the substrate surface between the grafting sites is filled with molecules having long-chain alkyl groups.

2. The process according to claim 1 wherein the substrate is mechanically rubbed on the surface.

3. The process according to claim 2 wherein the substrate is rubbed by moving a cloth thereon.

4. The process according to at least any one of claims 1 to 3 wherein the substrate used is made of glass or a polymeric material.

5. The process according to at least any one of claims 1 to 4 wherein the alignment layer is formed by chemically grafting polymer chains comprising mesomeric units onto the treated surface of the substrate.

6. The process according to claim 5 wherein the polymer chains form polymer brushes incorporating the mesomeric units in the side chains of the polymer.

7. The process according to claim 1 wherein the molecules used are compounds having alkyl groups with 6 to 30 carbon atoms.

8. The process according to claim 7 wherein the compounds used comprise alkyl groups having 8 to 18 carbon atoms.

9. The process according to any one of claims 1 to 8 wherein the polymer brushes are aligned by external forces and subsequently fixed by crosslinking.

10. The process according to claim 9 wherein the polymer brushes are aligned under shear.

11. A use of the alignment layer as produced according to at least any one of claims 1 to 10 for the production of liquid crystal displays.

12. A liquid crystal display comprising an alignment layer as produced according to any one of claims 1 to 10.
